# EUROPEAN PATENT APPLICATION

(11) **EP 3 480 063 A1**
(43) Date of publication of application: **08.05.2019**
(21) Application number: 18204098.0
(22) Date of filing: 02.11.2018
(51) Int. Cl.: B60R 16/02, F16L 3/227

(54) **A DIAMETER-ADJUSTABLE RETAINING APPARATUS**

(30) Priority: 03.11.2017 TR 201717269
(71) Applicant: Ford Otomotiv Sanayi Anonim Sirketi, 34885 Sancaktepe/Istanbul (TR)
(72) Inventor: CAKMAKLI, Ferhat, 34885 ISTANBUL (TR); OZCAN, Mustafa, ISTANBUL (TR); OZGULER, Tugrul, 34885 ISTANBUL (TR); CICEKCI, Didem, ISTANBUL (TR); DAGLI, Anil, ISTANBUL (TR); VODINA, Cagla, ISTANBUL (TR); YAVUZ, Ayse Venus, ISTANBUL (TR); ACAR, Metin, ISTANBUL (TR)
(74) Representative: Dericioglu, E. Korhan

(57) **Abstract**

The present invention relates to a diameter-adjustable retaining apparatus (1) which performs securing of one or more installation parts with different diameters at the preferred position; which can be used multiple times; and which at the same time ensures that the installation is not damaged during the clutch thanks to the geometry of the clamping surface that it comprises.

## Description

### Technical Field

The present invention relates to a diameter-adjustable retaining apparatus which is used for mounting the installation parts of various diameters in the area of their use in vehicles and which at the same time can be rigidly mounted in the fixed parts of the vehicle.

### Prior Art

There exist many systems within the vehicles in order for the running function of the vehicles to be achieved. Said systems consist of installation parts with different functions. Such installation parts may include many conductive components such as electric cables and fluid conduits. These parts are mounted within the vehicle during the manufacture of the latter.

Depending on the use of the vehicle, certain rules must be followed during the assembly to avoid system failures. Apart from that, it may be required to replace the parts in case of a system failure that may be experienced while using the vehicle. In such cases, the faulty part must be displaced and replaced by a new part. And in this case, positioning the installation parts accurately is of great importance during the reassembly.

Today, such positioning is generally performed on the vehicle body. During the process, various apparatuses are attached on the vehicle body. Such apparatuses ensure that the installation parts are positioned and mounted at the area of preference. However, the fact that the installation parts to be utilized have differing diameters results in the necessity of using apparatus with different diameters for positioning. Once the assembly is completed, the mounting cannot be performed with the same apparatus when a different part is needed to be mounted, which, in turn, increases the costs. Further, the use of different apparatuses for mounting the installation parts with differing diameters also makes the assembly difficult and extra time is required for finding the apparatus with the desired diameter.

The U.S. Patent Document No. US4244083 (A) with the priority date of 03.05.1979 in the state of the art discloses a cable clamp which will adapt to and hold firmly cables of various diameters. The aforementioned invention has a "U" shaped profile and two parallel legs extending angularly. The invention is secured by placing a cable between the body member and the base portion. Engagement with the base portion is ensured through the opening disposed on the body member for connectors and the diameter is adjusted by introducing the lugs provided on the extensions of the body member into the stage in the base portion. However, the present invention has some fundamental differences from this prior art document. First of all, the present invention differs from the aforementioned invention in terms of the clutch extension that the former comprises. In the present invention, the diameter-adjustable retaining apparatus is secured in the vehicle body using fittings. In order to perform this operation, the fitting is positioned on the clutch extension and attached to the fixed element. The fitting is located in the clearance remaining between the retainer and the clutch extension by means of an inclined surface disposed in the clutch protrusion. Moreover, the clutch extension has a moveable nature. The moveable structure of the clutch extension is utilized while positioning the fitting. Since the lugs provided in the aforementioned invention are configured in a way to engage with one another by way of the movement inhibitor, they allow one-way movement. After the fixed element is secured in the body and then the adjusting means is located with respect to the installation part, the positioning member prevents movement in reverse direction to the advancing direction of the adjusting means. The present invention comprises distinctive technical features: the fitting is seated in the fitting body; the clutch extension used for placing/displacing the fitting in the fixed element has moveable nature; and the inclined surface disposed in the clutch protrusion allows for one-way movement of the lugs provided in the adjustment extension.

The U.S. Patent Document No. US2016047403 (A1) with the priority date of 14.08.2014 in the state of the art discloses a clamping device which consists of two members. In this application, the upper member is threaded and the threaded stage configuration in the lower member allows for the connection between the upper member and the lower member. The present invention relates to apparatuses attached to stringed items or items that use strings or cords for functional or decorative purposes, for example, clothing such as sweatpants, shorts, hoods, jackets, or non-clothing items such as backpacks, luggage, and tote bags. The present invention, on the contrary, has been embodied for holding together installation parts or different diameters in automotive industry, wherein it differs from the prior art document in terms of the retainer configuration that it comprises and the fitting passing through said retainer configuration. In the present invention, the fitting in the state of the art is used while securing the diameter-adjustable retaining apparatus in the body. Moreover, the inhibitors disposed in the retainer of the invention inhibits the movement of the fitting once it is engaged in the retainer. In the patent document of prior art, there exist no configuration on the upper member that will secure the clamp in the body. The present invention is distinct from the prior art document in that the fitting is introduced into the retainer configuration disposed in the coupling body; the fixed element is secured in the fitting and the fitting is secured in the body.

The International Patent Document No. WO9740305 (A1) with the priority date of 22.04.1996 in the state of the art discloses an adjustable clip for securing cables. In this document, the U-shaped clip comprises at the both surfaces thereof nails that can be attached to one another. Using the freedom of nails in the U-shaped stage, at least two cables of different diameters can be tightened and secured. This clip disclosed in the prior art document differs from the technical features provided by the present invention in terms of the form of the clamping portion, the movability of the clamping element within a channel, and the positioning manner of the clamping element in the part by interconnecting the U-shaped stage of the main body.

The U.S. Patent Document No. US4497090 (A) with the priority date of 21.03.1983 in the state of the art discloses a radially-adjustable wire grip hose clamp. In this document, a form enclosing the cable is arranged in the inner surface of the clamp and the connection bolt is ensured to compress this form. In addition to this, the system is provided with an interlock mechanism. With the system, an attempt was made to allow the use of the same clamp for different diameters. On the other hand, the lack of a lug structure for diameter adjustment of the installation part and the positioning member used along with this structure, as well as the form of the body which retains the cable and the mechanical and physical properties of the mechanism, shows that the present invention is different from the prior art document when a comparison is made in terms of the mentioned properties.

Therefore, it has been deemed necessary, with a view to eliminating the problems resulting from the existing system, to use a retaining apparatus which is used for mounting a different installation part with a different diameter in any area, the use of which for more than one purpose is possible, and which has a geometry such that the clutching will be performed without damaging the installation part surface while clamping the part.

In the existing applications, there exist no invention that incorporates such characteristics as the ability to perform diameter adjustment by means of a part moving on the structure with lugs, the capability of securing the lug by fitting the same into a lock and allowing use in the fixation of installation parts of different diameters.

### Objects of the Invention

The object of the present invention is to provide a diameter-adjustable retaining apparatus which permits one or more installation parts of different diameters to be mounted at a preferred position and which is easy to use when multiple installation couplings are required.

Another object of the present invention is to provide a diameter-adjustable retaining apparatus which has an extensive contact surface and which minimizes the surface deformation likely to occur in the installation part during assembly.

Still another object of the present invention is to provide a diameter-adjustable retaining apparatus which minimizes operator faults that may be experienced during the assembly of the installation part in the desired position.

Yet another object of the present invention is to provide a diameter-adjustable retaining apparatus which allows for an assembly with a single and simple movement and at the same time saving on time.

And another object of the present invention is to provide a diameter-adjustable retaining apparatus which, after the first coupling and mounting process, may be re-adjusted and used for different installation parts.

### Brief Description of the Invention

A diameter-adjustable retaining apparatus which has been embodied for achieving the objects of the present invention and which is defined in the first claim and the other dependent claims comprises a fixed element that generally consists of a seating body, a coupling body, and an adjustment extension. The coupling body is provided with a retainer and a clutch extension while the adjustment extension is provided with at least one lug. In addition, the diameter-adjustable retaining apparatus comprises an adjusting means consisting of a securing body having a positioning member and a clamping body. The diameter-adjustable retaining apparatus is secured in the body once the fitting is introduced into the retainer. Afterwards, the installation part is placed in the clearance between the adjustment extensions and the adjusting means is engaged in the fixed element. The adjusting means is made to assume a position defined with respect to the diameter of the installation part and secured in this position by way of the positioning member. At the end of these operations, the installation part is retained by means of the clamping surface, and then mounted.

### Detailed Description of the Invention

The diameter-adjustable retaining apparatus developed for achieving the objects of the present invention is illustrated in the accompanying drawings, in which;

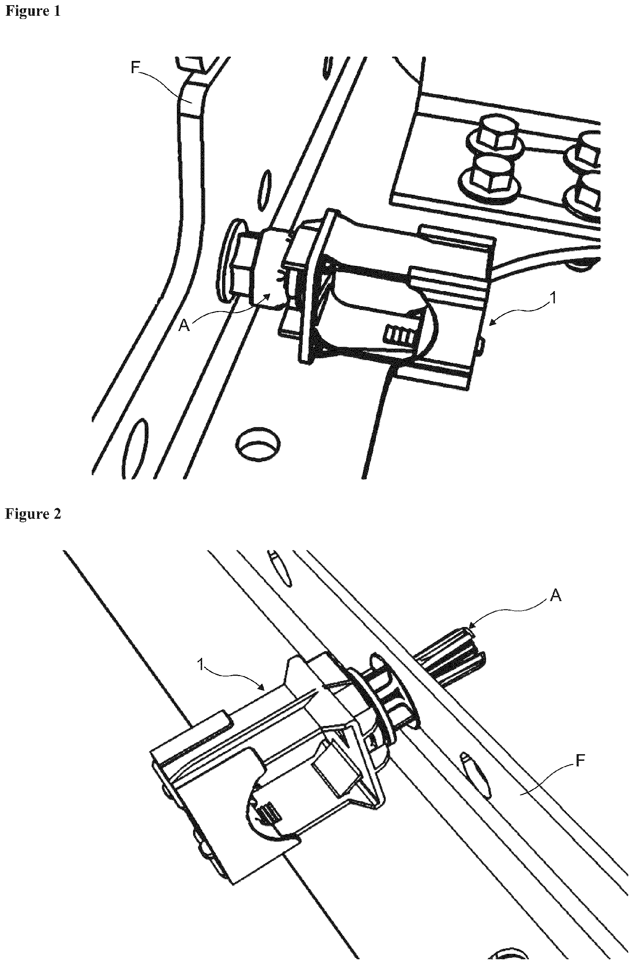

- **Fig. 1.**: View of the diameter-adjustable retaining apparatus when mounted in the body by means of a fitting.
- **Fig. 2.**: Another view of the diameter-adjustable retaining apparatus when mounted in the body by means of a fitting.

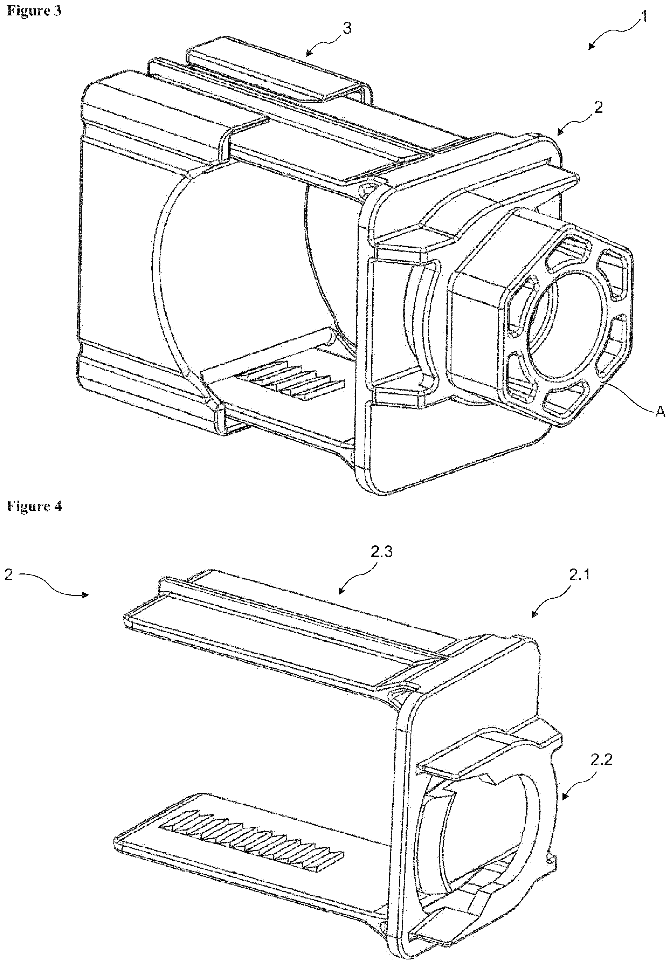

- **Fig. 3.**: Perspective view of the diameter-adjustable retaining apparatus along with the fitting.
- **Fig. 4.**: Perspective view of the fixed element from an angle.

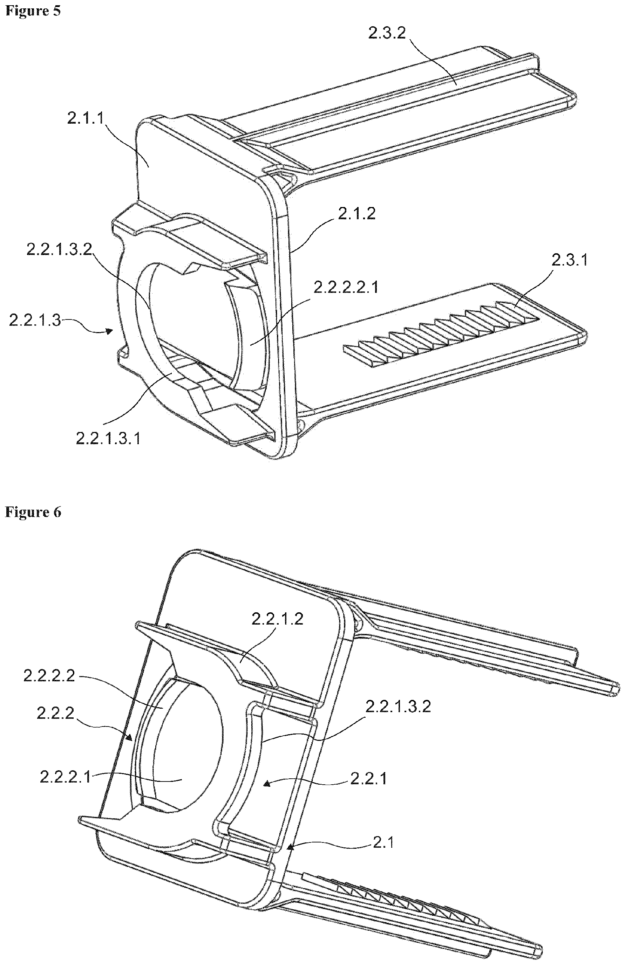

- **Fig. 5.**: Perspective view of the fixed element from another angle.
- **Fig. 6.**: Perspective view of the fixed element from another angle.

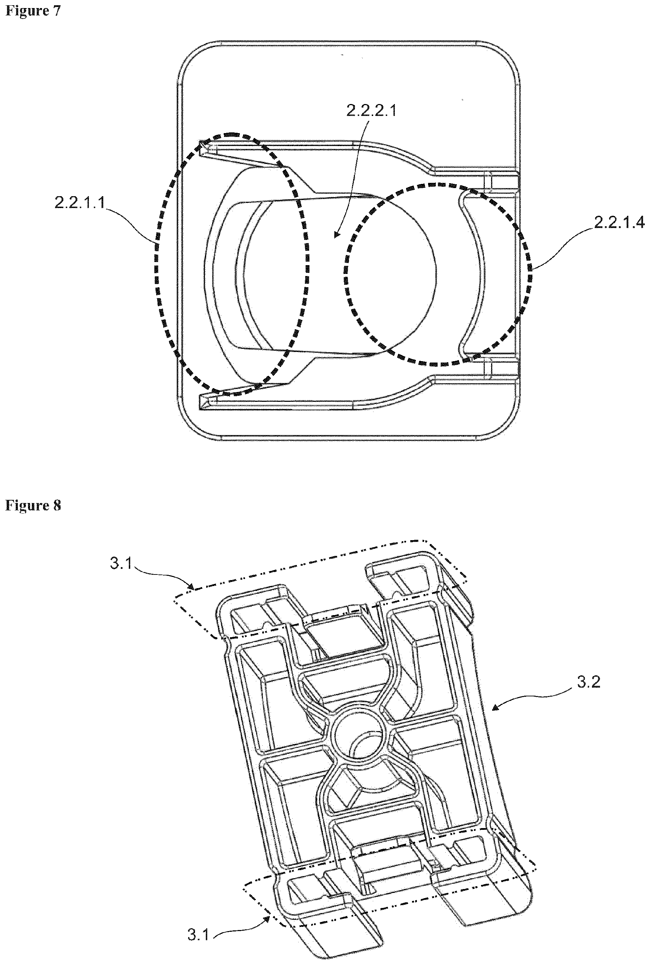

- **Fig. 7.**: Front view of the fixed element.
- **Fig. 8.**: Perspective view of the adjusting means from an angle.

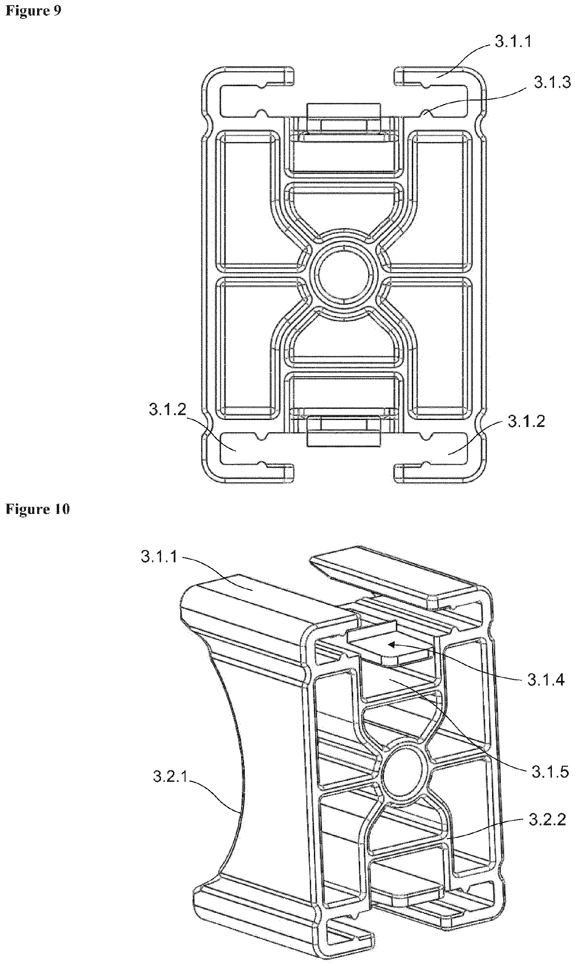

- **Fig. 9.**: Front view of the adjusting means.
- **Fig. 10.**: Perspective view of the adjusting means from another angle.

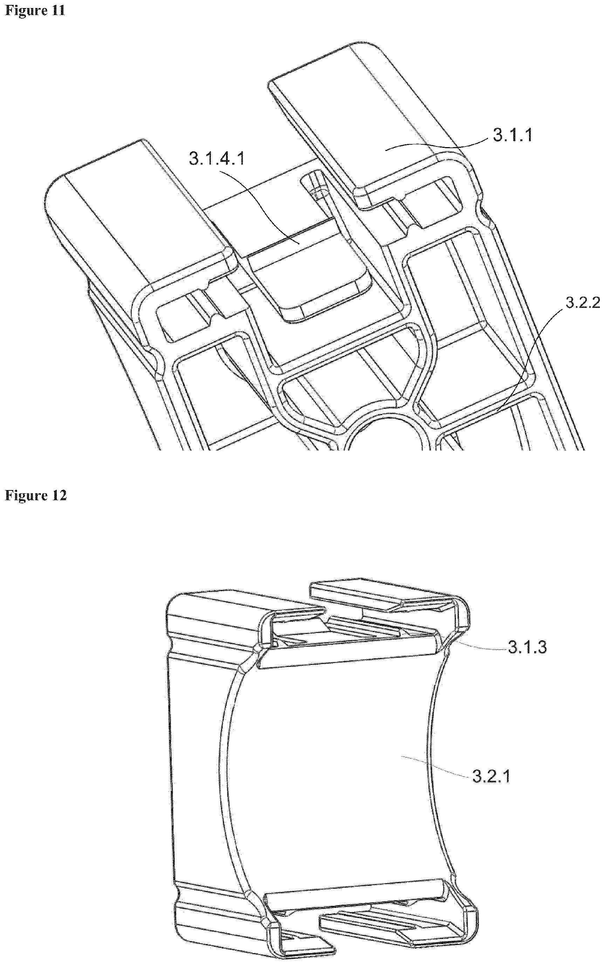

- **Fig. 11.**: Cross-sectional view of the adjusting means from another angle.
- **Fig. 12.**: Perspective view of the adjusting means from another angle.

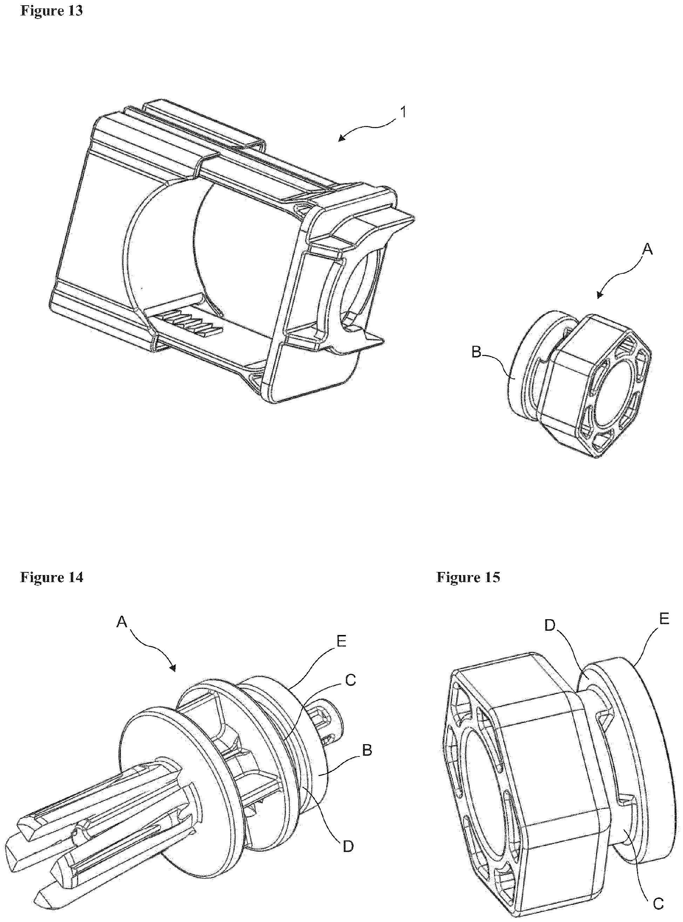

- **Fig. 13.**: Exploded view of the diameter-adjustable retaining apparatus and the fitting.
- **Fig. 14.**: Perspective view of the fitting in the state of the art.
- **Fig. 15.**: Perspective view of another fitting in the state of the art.
The parts in the drawings are enumerated individually and the reference numbers corresponding thereto are presented below.
**1.** Diameter-adjustable retaining apparatus
**2.** Fixed element
   **2.1.** Seating body
      **2.1.1.** Front surface
      **2.1.2.** Rear surface
   **2.2.** Coupling body
      **2.2.1.** Retainer
         **2.2.1.1.** Passage clearance
         **2.2.1.2.** Fastening extension
         **2.2.1.3.** Inhibitor
            **2.2.1.3.1.** Resting surface **2.2.1.3.2.** Inhibiting surface
         **2.2.1.4.** Seating clearance
      **2.2.2.** Clutch extension
         **2.2.2.1.** Contact surface
         **2.2.2.2.** Clutch protrusion
            **2.2.2.2.1.** Inclined surface
   **2.3.** Adjustment extension
      **2.3.1.** Lug
      **2.3.2.** Extension
**3.** Adjusting means
   **3.1.** Securing body
      **3.1.1.** Securing extension
      **3.1.2.** Groove
      **3.1.3.** Protrusion
      **3.1.4.** Positioning member
         **3.1.4.1.** Movement inhibitor
      **3.1.5.** Space
   **3.2.** Clamping body
      **3.2.1.** Clamping surface
      **3.2.2.** Support

**A.** Fitting
**B.** Fastening body
**C.** Resting body
**D.** Upper surface
**E.** Lower surface
**F.** Body

A diameter-adjustable retaining apparatus (1) usable for positioning and mounting the installation parts of different diameters in the body (F) basically comprises:
- at least one fixed element (2) which enables the installation part preferred to be positioned on the body (F) to be secured in the body (F) by means of the fitting (A) and which has at least one seating body (2.1), at least one coupling body (2.2), and at least one adjustment extension (2.3),
   - said seating body (2.1) being secured in the body (F) and interconnecting the coupling body (2.2) disposed at one surface and the adjustment extension (2.3) at the other side thereof,
   - said at least one coupling body (2.2) having at least one clamp (2.2.1) which secures the fitting (A) through the fastening body (B) and thus prevents the fitting (A) from losing its current position when a force is not applied thereon; and at least one clutch extension (2.2.2) which, upon applying a force thereon, moves and enables the fitting (A) to be seated in the retainer (2.2.1) or be removed from the retainer (2.2.1), and
   - said at least one adjustment extension (2.3) which allowing the achievement of the required positioning for the diameter adjustment of the installation part which is preferred to be mounted in the body (F),
- at least one adjusting means (3) which is capable of moving on the adjustment extension (2.3) and has at least one securing body (3.1) and at least one clamping body (3.2),
   - said at least one securing body (3.1) having at least one positioning member (3.1.4) which is moved along the adjustment extension (2.3) according to the diameter of the installation part to be mounted and enables it to be secured at the preferred position, wherein the adjustment extension (2.3) is introduced into said securing body,
   - said at least one clamping body (3.2) holding the installation part subsequent to positioning the securing body (3.1) on the adjustment extension (2.3).

In this embodiment of the invention, a diameter-adjustable retaining apparatus (1) consisting of a fixed element (2) and an adjusting means (3) is provided. This diameter-adjustable retaining apparatus (1) is secured in the body (F) by means of the fitting (A). While the fixed element (2) is secured in the body (F), the adjusting means (3) performs a sliding movement on the adjustment extension (2.3) of the fixed element (2). Thus, unlike the fixed element (2), the adjusting means (3) is capable of moving.

In an embodiment of the invention, the fixed element (2) consists of a seating body (2.1), a coupling body (2.2), and an adjustment extension (2.3). The seating body (2.1) is a plate having preferably a rectangular form. The front surface (2.1.1) of the seating body (2.1) is provided with the coupling body (2.2) whereas the rear surface (2.1.2) thereof is provided with the adjustment extension (2.3). As for the coupling body (2.2), it basically consist of two portions. The first one of these portions is a retainer (2.2.1) arranged in an elevated manner from the front surface (2.1.1) of the seating body (2.1) towards the side at which the adjustment extension (2.3) is not present. The connection of the inhibitor (2.2.1.3) belonging to the retainer (2.2.1) with the front surface (2.1.1) is ensured by the fastening extension (2.2.1.2). The length of the fastening extension (2.2.1.2) is nearly equal to the total height of the fastening body (B) disposed in the fitting (A) and the resting surface (2.2.1.3.1) disposed in the inhibitor (2.2.1.3). The fastening body (B) is seated in the seating clearance (2.2.1.4) by passing through the passage clearance (2.2.1.1) of the retainer (2.2.1). Upon this seating movement, the contact between the resting surface (2.2.1.3.1) of the fastening body (B) provided in the inhibitor (2.2.1.3) and the resting body (C) is ensured. Moreover, in case of the fitting (A) being seated in the seating clearance (2.2.1.4), the connection between the upper surface (D) of the fastening body (B) and the inhibiting surface (2.2.1.3.2) is ensured. Hence, the fitting (A) is secured within the inhibitor (2.2.1.3) and prevented from being disconnected from the retainer (2.2.1) without applying force thereon.

In an embodiment of the invention, the second part of the coupling body (2.2) is the clutch extension (2.2.2). The clutch extension (2.2.2) is made up of the contact surface (2.2.2.1) and the clutch protrusion (2.2.2.2). The clutch extension (2.2.2) is arranged on the front surface (2.1.1) of the seating body (2.1). The clutch extension (2.2.2) is preferably configured such that it will be connected to the front surface (2.1.1) through one edge thereof while lacking connection with the front surface (2.1.1) through other edges. Such geometry of the clutch extension (2.2.2) allows the clutch protrusion (2.2.2.2) to move up and down from its free end. When it is preferred to place the fitting (A) in the retainer (2.2.1), a force is applied on the clutch protrusion (2.2.2.2) by means of the fastening body (B). Upon the applied force, the clutch extension (2.2.2) moves up and down around the connection point. With the movement of the clutch extension (2.2.2), the fitting (A) can be introduced into the retainer (2.2.1). When the fitting (A) is placed in the retainer (2.2.1), the lower surface (E) in the fastening body (B) of the fitting (A) and the contact surface (2.2.2.1) become in surface-to-surface contact with one another. When no force is applied on the fitting (A), the fitting (A) which is attached between the inhibiting surface (2.2.1.3.2) and the contact surface (2.2.2.1) maintains its position. The clutch protrusion (2.2.2.2) provided at the free corner of the clutch extension (2.2.2) is preferably provided with an inclined surface (2.2.2.2.1). When a force is applied on the inclined surface (2.2.2.2.1) by way of the fitting (A) while the fitting (A) is being introduced into the retainer (2.2.1), the clutch extension (2.2.2) undergoes an amount of elastic deformation in the direction of force, and thus the fitting (A) can readily advance within the retainer (2.2.1) along the contact surface (2.2.2.1). In other words, this advance is achieved by transferring the force applied on the inclined surface (2.2.2.2.1) to the contact surface (2.2.2.1) and by the up and down movement of the clutch extension (2.2.2) through its one end.

In an embodiment of the invention, the fixed element (2) is provided with an adjustment extension (2.3). The adjustment extension (2.3) is preferably two plates positioned in parallel to one another, wherein each one corresponds to an end on the rear surface (2.1.2) of the seating body (2.1). In this embodiment of the invention, the portion of the adjustment extension (2.3) which is secured on the rear surface (2.1.2) of the seating body (2.1) is somewhat thicker than the dimensions of the adjustment extension (2.3). In this embodiment, the edge of the adjustment extension (2.3) which is connected to the seating body (2.1) is slightly thicker so that it can be sturdily connected to the rear surface (2.1.2) of the adjustment extension (2.3). In this embodiment of the invention, there exist two adjustment extensions (2.3) and the lugs (2.3.1) disposed only at one surface of said adjustment extensions (2.3) face one another. Positioning is performed according to the diameter of the installation part which is preferred to be placed on the body (F). Said positioning is achieved by the adjusting means (3) attached to the lugs (2.3.1) in the adjustment extension (2.3). In this embodiment of the invention, the surface of the adjustment extension (2.3) on which a lug (2.3.1) is not present is preferably provided with a longitudinal extension (2.3.2). Such extension (2.3.2) creates a resistance that will prevent deformations such as bending, twisting that may occur on the adjustment extension (2.3) when the diameter-adjustable retaining apparatus (1) is secured in the body (F).

In addition to the fixed element (2), another part belonging to the diameter-adjustable retaining apparatus (1) disclosed in an embodiment of the invention is the adjusting means (3). The adjusting means (3) preferably has a rectangular prism-like geometry and consists of the securing body (3.1) and the clamping body (3.2). The securing body (3.1) is preferably arranged at both ends of the clamping body (3.2). The securing body (3.1) is provided with the securing extension (3.1.1). The securing extension (3.1.1) preferably has a C-shaped profile geometry which is obtained by bending the parts extending from the clamping body (3.2). There exist two of such securing extension (3.1.1) opposing one another, wherein there is a groove (3.1.2) between two parallel edges of these securing extensions (3.1.1). The adjusting means (3) performs a sliding movement along the adjustment extension (2.3) by way of said groove (3.1.2) disposed in the securing body (3.1). Moreover, in this embodiment of the invention, there are protrusions (3.1.3) at the surfaces of the securing extension (3.1.1) facing one another in the groove (3.1.2), preferably one at each surface. The protrusion (3.1.3) is in direct contact with the adjustment extension (2.3) surface. When the protrusions (3.1.3) contact with the adjustment extension (2.3), they support the adjustment extension (2.3) and prevent shock and movement likely to be experienced during use. The securing body (3.1) is provided thereon with a positioning member (3.1.4). The positioning member (3.1.4) is connected to the securing extension (3.1.1) through an edge thereof. Further, other edges of the positioning member (3.1.4) are provided with a space (3.1.5) ensuring that it will not contact with any surface. The space (3.1.5) arranged at these portions ensures that the positioning member (3.1.4) can perform rotational movement through its end connected with the securing extension (3.1.1) in case a force is applied on the positioning member (3.1.4).

In an embodiment of the invention, there exists a movement inhibitor (3.1.4.1) on the positioning member (3.1.4), preferably at the middle portions thereof. The movement inhibitor (3.1.4.1) is preferably designed in right-angled triangle geometry. The lugs (2.3.1) present on the adjustment extension (2.3) and the movement inhibitor (3.1.4.1) disposed on the positioning member (3.1.4) are telescopic. The lug (2.3.1) and the positioning member (3.1.4) preferably has a right-angled triangle form and prevent the movement of the other when seated one on the top of the other. That is, when the lugs (2.3.1) and movement inhibitor (3.1.4.1) overlap, they are seated mutually one on the top of the other, thereby preventing two-way movement on an axis. Taking into account the distance between the clamping surface (3.2.1) of the adjusting means (3) and the rear surface (2.1.2) of the seating body (2.1) depending on the diameter of one or more installation parts preferred to be secured on the body (F), the user performs positioning in the adjusting means (3). Such positioning is completed when the lug (2.3.1) and the positioning member (3.1.4) overlap at the preferred positon. As a consequence, the adjusting means (3) assumes the preferred position on the fixed element (2) and then secured as such.

In an embodiment of the invention, provided between the securing bodies (3.1) disposed at both edges of the adjusting means (3) is a clamping body (3.2). In this embodiment of the invention, the clamping surface (3.2.1) has a spring geometry, wherein one end of the spring geometry is at the side of a securing body (3.1) while the other end at the side of another securing body (3.1). The clamping surface (3.2.1) is designed such that it will grab one or more installation parts optimally but it may be configured in different geometries in other embodiments of the invention. When the adjusting means (3) is positioned on the lugs (2.3.1), it is compressed between the clamping surface (3.2.1) of the installation part and the rear surface (2.1.2) of the seating body (2.1). In order for the adjusting means (3) to have a resistant structure and to prevent such problems as bending, twisting, and breaking likely to result from impacts, the rear portion of the clamping surface (3.2.1), i.e. the inner portion of the clamping body (3.2), is provided with a support (3.2.2). The support (3.2.2) is designed as such with a view to obtaining a resistant structure when one or more installation parts are clutched at optimum value.

The diameter-adjustable retaining apparatus (1) in this embodiment of the invention operates as follows. The fitting (A) applies a force on the inclined surface (2.2.2.2.1) through the passage clearance (2.2.1.1) and is advanced towards the inside of the retainer (2.2.1). Upon the force applied on the inclined surface (2.2.2.2.1), the clutch extension (2.2.2) performs partial angular movement towards the portion in which the adjustment extension (2.3) is present, around the connection axis at the site of connection thereof with the seating body (2.1). This movement continues until the resting body (C) of the fitting (A) is completely seated on the resting surface (2.2.1.3.1) in the retainer (2.2.1). At the end of this process, the fastening body (B) is attached in the seating clearance (2.2.1.4). When the resting surface (2.2.1.3.1) and the resting body (C) are in full contact with one another, the clutch extension (2.2.2) assumes its original horizontal position again. Thus, the lower surface (E) of the fitting (A) and the contact surface (2.2.2.1) of the clutch extension (2.2.2) are now in surface-to-surface contact position. At the end of all these operations, the fastening body (B) is completely seated within the retainer (2.2.1) and at the following stage the fitting (A) is secured in the body (F).

In another embodiment of the invention, first, the fitting (A) is secured in the body (F), and then the fixed element (2) is engaged in the fitting (A) using the same method.

After securing of the fitting (A) and the fixed element (2) in the body (F) is completed, one or more installation parts desired to be mounted in the body (F) are located in the clearance between the adjustment extensions (2.3). Afterwards, the adjusting means (3) is introduced into the fixed element (2). Such operation is performed by attaching the groove (3.1.2) to the adjustment extension (2.3). Subsequently, the adjusting means (3) is advanced in the groove (3.1.2) and located at a position determined according to the diameter of the one or more installation parts preferred to be mounted. During the attachment of the adjusting means (3) in the fixed element (2), the lugs (2.3.1) and positioning member (3.1.4) have position one on the top of the other. Thanks to the movability of the positioning member (3.1.4) up and down through its free end, the adjusting means (3) can be easily advanced along the adjustment extension (2.3). The adjusting means (3) is made to assume and maintain its position on the fixed element (2) determined according to the diameter of the installation part or installation parts, and said adjusting means (3) is secured in its current position by means of the movement inhibitor (3.1.4.1) disposed on the positioning member (3.1.4). Since the movement inhibitor (3.1.4.1) allow a one-way movement due to its configuration, it does not cause a movement in reverse direction. Unless an additional force is applied on the positioning member (3.1.4), the adjusting means (3) remains stably in its position.

The present invention, the diameter-adjustable retaining apparatus (1), performs securing of installation parts with different diameters at the preferred position; can be used multiple times; and at the same time ensures that the installation is not damaged during the clutch thanks to the geometry of the clamping surface (3.2.1) that it comprises.

## Claims

1. A diameter-adjustable retaining apparatus (1) usable for positioning and mounting the installation parts of different diameters in the body (F), **characterized in** basically comprising:
- at least one fixed element (2) which enables the installation part preferred to be positioned on the body (F) to be secured in the body (F) by means of the fitting (A) and which has at least one seating body (2.1), at least one coupling body (2.2), and at least one adjustment extension (2.3),
• said seating body (2.1) being secured in the body (F) and interconnecting the coupling body (2.2) disposed at one surface and the adjustment extension (2.3) at the other side thereof,
• said at least one coupling body (2.2) having at least one clamp (2.2.1) which secures the fitting (A) through the fastening body (B) and thus prevents the fitting (A) from losing its current position when a force is not applied thereon; and at least one clutch extension (2.2.2) which, upon applying a force thereon, moves and enables the fitting (A) to be seated in the retainer (2.2.1) or be removed from the retainer (2.2.1), and
• said at least one adjustment extension (2.3) which allowing the achievement of the required positioning for the diameter adjustment of the installation part which is preferred to be mounted in the body (F),
- at least one adjusting means (3) which is capable of moving on the adjustment extension (2.3) and has at least one securing body (3.1) and at least one clamping body (3.2),
• said at least one securing body (3.1) having at least one positioning member (3.1.4) which is moved along the adjustment extension (2.3) according to the diameter of the installation part to be mounted and enables it to be secured at the preferred position, wherein the adjustment extension (2.3) is introduced into said securing body,
• said at least one clamping body (3.2) holding the installation part subsequent to positioning the securing body (3.1) on the adjustment extension (2.3).

2. The diameter-adjustable retaining apparatus (1) as in Claim 1, **characterized by** a seating body (2.1) which has a front surface (2.1.1) in which the coupling body (2.2) into which the fitting (A) is introduced is present and a rear surface (2.1.2) in which the adjustment extension (2.3) allowing one or more installation parts to be compressed is present and which holds together the coupling body (2.2) and the adjustment extension (2.3).

3. The diameter-adjustable retaining apparatus (1) as in Claim 1, **characterized by** a coupling body (2.2) which consists of a passage clearance (2.2.1.1), a fastening extension (2.2.1.2), an inhibitor (2.2.1.3) and a seating clearance (2.2.1.4) and which has a retainer (2.2.1) ensuring that the fitting (A) remains in a stable position.

4. The diameter-adjustable retaining apparatus (1) as in Claim 3, **characterized by** an inhibitor (2.2.1.3) the connection of which, in case of the fitting (A) being seated in the seating clearance (2.2.1.4), with the upper surface (D) of the fastening body (B) is ensured and which, unless a force is applied on the fitting (A), prevents the fitting (A) from being disconnected with the retainer (2.2.1).

5. The diameter-adjustable retaining apparatus (1) as in Claim 1, **characterized by** a clutch extension (2.2.2) which consists of a contact surface (2.2.2.1) and a clutch protrusion (2.2.2.2); which is disposed at the front surface (2.1.1) of the seating body (2.1); which has a geometry such that it will be connected with the front surface (2.1.1) through one edge thereof; and which is also capable of performing up and down movement through its free end.

6. The diameter-adjustable retaining apparatus (1) as in Claim 5, **characterized by** a clutch protrusion (2.2.2.2) which makes the clutch extension (2.2.2) move up and down around the position at which it is connected to the front surface (2.1.1) when a force is applied thereon by means of the fastening body (B), and thus ensures that the fitting (A) is introduced into the retainer (2.2.1).

7. The diameter-adjustable retaining apparatus (1) as in Claim 5, **characterized by** a clutch protrusion (2.2.2.2) which has an inclined surface (2.2.2.2.1) enabling the fitting (A) to advance towards the retainer (2.2.1) along the contact surface (2.2.2.1) when the clutch extension (2.2.2) undergoes elastic deformation upon a force being applied thereon by means of the fitting (A).

8. The diameter-adjustable retaining apparatus (1) as in Claim 5, **characterized by** a clutch protrusion (2.2.2.2) which has an inclined surface (2.2.2.2.1) which enables the fitting (A) which is attached to the retainer (2.2.1) to maintain its current position when no force is applied on the fitting (A) being seated in the retainer (2.2.1).

9. The diameter-adjustable retaining apparatus (1) as in Claim 1, **characterized by** a lug (2.3.1) to which the adjusting means (3) is engaged for diameter adjustment of the installation part preferred to be positioned and an adjustment extension (2.3) which has an extension (2.3.2) preventing deformations such as bending, twisting likely to occur.

10. The diameter-adjustable retaining apparatus (1) as in Claim 1, **characterized by** a securing body (3.1) which consists of the a securing extension (3.1.1), a groove (3.1.2), a protrusion (3.1.3) and a space (3.1.5) and which serves as a bearing for the adjustment extension (2.3).

11. The diameter-adjustable retaining apparatus (1) as in Claim 1, **characterized by** a securing body (3.1) which has a groove (3.1.2) disposed at both ends of the clamping body (3.2) and enabling the adjusting means (3) to perform sliding movement along the adjustment extension (2.3).

12. The diameter-adjustable retaining apparatus (1) as in Claim 1, **characterized by** a securing body (3.1) having a protrusion (3.1.3) which directly contacts with the surface of the adjustment extension (2.3) and which, upon such contact with the adjustment extension (2.3), supports the adjustment extension (2.3) and prevents the shock and movement likely to be experienced during use.

13. The diameter-adjustable retaining apparatus (1) as in Claim 1, **characterized by** a securing body (3.1) having a positioning member (3.1.4) which is connected through an edge thereof to the securing extension (3.1.1) and performs rotational movement through its end of connection with the securing extension (3.1.1) in case a force is applied thereon.

14. The diameter-adjustable retaining apparatus (1) as in Claim 1, **characterized by** a positioning member (3.1.4) having a movement inhibitor (3.1.4.1) which is telescopic with the lugs (2.3.1) disposed on the adjustment extension (2.3) and prevents the movement of the adjusting means (3) on the fixed element (2) when it overlaps with the lug (2.3.1).

15. The diameter-adjustable retaining apparatus (1) as in Claim 1, **characterized by** a clamping body (3.2) having a clamping surface (3.2.1) which compresses the installation part between the seating body (2.1) and the adjusting means (3) when the adjusting means (3) is located on the lugs (2.3.1) as well as a support (3.2.2) providing resistance in case of clutching one or more installation parts.
